# EUROPÄISCHE PATENTANMELDUNG

(11) **EP 1 800 836 A1**
(43) Veröffentlichungstag der Anmeldung: **27.06.2007**
(21) Anmeldenummer: 06024567.7
(22) Anmeldetag: 28.11.2006
(51) Int. Cl.: B29C 51/44, B29C 51/46

(54) **Verfahren und Vorrichtung zum Überführen von aus einer thermoplastischen Kunststofffolie tiefgezogenen Behältern zwischen einer Aufnahmestation und einer Abgabestation**

(30) Priorität: 22.12.2005 DE 102005061462
(71) Anmelder: ILLIG Maschinenbau GmbH & Co. KG, 74081 Heilbronn (DE)
(72) Erfinder: Scheithauer, Michael, 74842 Billigheim (DE)

(57) **Zusammenfassung**

Das Verfahren und die Vorrichtung zum Überführen von aus thermoplastischer Kunststofffolie tiefgezogenen Behältern (9) zwischen einer Aufnahmestation und einer Abgabestation mit einer zwischen den beiden Stationen verschiebbaren Aufnahmeeinrichtung mit Einrichtungen zum Festhalten der Behälter wird so ausgebildet, dass eine Vakuumquelle und eine mit einer Steuerung verbundene Druckmesseinrichtung (25) zum Messen des sich während des Überführens im Inneren der Behälter ergebenden Unterdruckes anschließbar sind, wobei die Steuerung bei Abweichung des gemessenen Wertes von einem vorgegebenen Wert ein Ausgangssignal erzeugt.

## Beschreibung

Die Erfindung betrifft ein Verfahren und Vorrichtung zum Überführen von aus einer thermoplastischen Kunststofffolie tiefgezogenen Behältern zwischen einer Aufnahmestation und einer Abgabestation.

Die Druckschrift DE 34 39 660 C2 zeigt eine Entnahmevorrichtung für Behälter aus thermoplastischer Kunststofffolie, bei der nach dem Formen und Trennen der Behälter von der Kunststofffolie eine flache Platte, die Bohrungen aufweist, horizontal in das teilweise geöffnete Werkzeug hinein geschoben wird. Die Platte senkt sich auf die Ränder der Behälter ab und an die Platte wird ein Unterdruck so angelegt, dass die Behälter an die Platte gesaugt werden. Anschließend wird das Unterteil des Formwerkzeuges so weit vertikal abgesenkt, dass die Behälter mittels der Platte horizontal aus dem Werkzeug entfernt und entweder auf einem Saugband unter Verwendung von Druckluft zum Ablösen vertikal abgesetzt oder durch eine Schwenkbewegung der Platte in einen horizontalen Behälterstapel verbracht werden.

Die Druckschrift EP 0 679 141 schlägt einen Aufnehmer- und Transferkopf für Behälter aus thermoplastischer Kunststofffolie vor, der nach dem Formen und Trennen der Behälter von der Kunststofffolie horizontal in das teilweise geöffnete Werkzeug hinein geschoben wird und Mittel zum Aufnehmen und Transferieren der Behälter aufweist. Die Mittel sind als schaltbare, mechanische Zähne, elastisch verformbare Lippen oder ringförmige Aufnahmen ausgebildet. Die Mittel sind weiterhin so ausgebildet, dass sie zunächst durch vertikales Absenken die Behälter aufnehmen und nach dem Transferieren zur Ablageposition durch den Einsatz von Druckluft durch das Einziehen der Zähne, Entlasten der Lippen oder durch vertikales Abstoßen mittels kurzer Kolben die Behälter abgeben.

Aus der EP 1 000 887 B1 ist eine Vorrichtung des Anmelders bekannt, bei der nach dem kombinierten Formen und Stanzen von Behältern aus thermoplastischer Kunststofffolie der Untertisch der Form/Stanzstation abgesenkt und geschwenkt wird, so dass die untere Werkzeughälfte in eine Ausstoßstellung gebracht wird und eine Aufnahmeplatte einer Vorrichtung zum Aufnehmen und Stapeln von Behältern soweit an das Werkzeug herangefahren wird, dass die ausgestoßenen Behälter aufgenommen und angesaugt werden können. Die Aufnahmeplatte, die auf zwei gegenüberliegenden Seiten Behälteraufnahmeeinrichtungen aufweist, wird von der Werkzeughälfte weggefahren, übergibt die beim letzten Takt zuvor aufgenommenen Behälter in die Stapelmagazine, bewegt sich zurück in eine Zwischenstellung und schwenkt um 180°. Beim nächsten Takt nehmen die Aufnahmeeinrichtungen die nächste Behälterreihe auf und ein Schlitten fährt einen ganzen Hub, so dass die beim letzten Takt aufgenommenen Behälter in die Stapelmagazine übergeben werden. Die Aufnahmeplatte wird wieder zurück in eine Zwischenposition gefahren und um 180° geschwenkt, so dass die leeren Aufnahmeeinrichtungen die nächsten Behälter aufnehmen können, während die bereits mit Behältern versehenen Aufnahmeeinrichtungen diese weiterhin festhalten.

Es sind weiterhin Vorrichtungen bekannt, die thermogeformte Behälter von einem geöffneten Form/Stanzwerkzeug aufnehmen und nach einem Verschwenken der Aufnahmeeinrichtung die Behälter vertikal nach oben abstapeln.

Ebenfalls sind Vorrichtungen des Anmelders bekannt, bei denen Behälter geformt und so angestanzt werden, dass sie noch in der thermoplastischen Folienbahn verbleiben und erst anschließend in einer Trennvorrichtung aus der Folienbahn ausgebrochen werden und mittels einer Aufnahmevorrichtung aufgenommen, gehalten und aufgestapelt werden.

In der Druckschrift DE 42 24 009 A1 wird ein Warmformungsverfahren vorgeschlagen, bei dem in einer Vorrichtung, die ein Oberwerkzeug, aber zwei Unterwerkzeuge zum kombinierten Formen und Stanzen aufweist, die beiden Unterwerkzeuge auf einer Schiebeeinrichtung gleitend geführt werden und so die Zeit zur Entnahme der Behälter auf die Zeit zum Verschieben der Unterwerkzeuge reduziert werden kann. Die geformten Behälter werden mittels Saugkästen von dem jeweiligen nach oben offenen Unterwerkzeug vertikal entnommen und in einer horizontalen Schwenkbewegung einer Transportstrecke zugeführt, auf der beliebige Nachbearbeitungsschritte durchgeführt werden können.

Die Druckschrift EP 0 720 906 B1 zeigt ein Verfahren zum Kontrollieren der Unversertheit von Behältern aus thermoplastischer Kunststofffolie, bei dem nach dem Tiefziehen der Behälter bei geschlossenem Formwerkzeug das Unterteil des Formwerkzeug mit einem Druck beaufschlagt wird, der über eine festgelegte Zeit ansteht und der von unten gegen die Außenseite der geformten Behälter wirkt. Sinkt der Druck während der Zeit nicht unter einen festgelegten Wert, werden die Behälter als unversehrt angesehen. Das Verfahren erkennt Durchbrüche ausreichender Größe, die sich im Bodenbereich der Behälter befinden. Fehlstellen in der Wand können nicht erkannt werden. Eine nicht erfolgreiche Entformung von Behältern kann nicht überprüft werden.

Die Druckschrift US 3,683,677 schlägt einen Leck-Detektor vor zum Erkennen von Lecks in Plastikflaschen und anderen Behältern. Hierbei wird in der Flasche ein Überdruck erzeugt und der Abbau des Überdruckes, hervorgerufen durch ein mögliches Loch in der Wand der Flasche über einen eingebauten Mechanismus der Vorrichtung in einer festgelegten Testzeit registriert. Dieser Leck-Detektor ist für die Prüfung einzelner flaschenförmiger, ausreichend stabiler Behälter mit Überdruck geeignet.

Bedingt durch Inhomogenitäten in der Kunststofffolie oder andere, unkontrolliert auftretende Einflüsse, kann es dazu kommen, dass Behälter nach dem Formen und Stanzen nicht ausgestoßen werden und im Werkzeug verbleiben oder dass Folienabschnitte nicht optimal zu Behältern umgeformt werden und z. B. im Bereich des Bodens große Durchbrüche aufweisen, also die Behälter nicht zum bestimmungsgemäßen Gebrauch verwendet werden können. Weder das Fehlen eines Behälters noch das Fehlen eines Behälterteils z.B. des Bodens, wird bemerkt. Es kann in Folge entweder zu Doppelungen und damit zu möglichen Beschädigungen im Werkzeug kommen oder es werden unvollständig ausgebildete Behälter ohne weitere Kontrolle in Nachfolgeeinrichtungen verarbeitet und bereiten z.B. bei der Verwendung in Füllmaschinen beim Verfüllen von flüssigen Produkten Probleme.

Die bekannten Warmformverfahren und -Vorrichtungen mit formend-stanzender Arbeitsweise zeigen keine Einrichtungen, die die gleichzeitige, taktgemäße Prüfung sämtlicher Behälter eines Arbeitstaktes auf vollständige Anzahl der Behälter bei der Entformung sowie auf ihre Unversehrtheit während des Überführungsvorgangs erlauben.

Der Erfindung liegt deshalb die Aufgabe zugrunde, ein Verfahren und eine Vorrichtung zum Überführen von Behältern aus thermoplastischer Kunststofffolie von einer Aufnahmestation zu einer Abgabestation mit einer zwischen beiden Stationen verschiebbaren Überführungsvorrichtung so zu gestalten, dass während der Verschiebung der Überführungsvorrichtung von der Aufnahmestation zur Abgabestation das Fehlen von Behältern an Aufnahmestellen der Überführungseinrichtung sowie das Auftreten von Durchbrüchen in Wandungen und/oder Böden der Behälter erkannt wird und ein Ausgangssignal an eine Maschinensteuerung gemeldet wird, damit Folgemaßnahmen wie Fehlermeldungen, Maschinenstops oder Ausscheidungen von Behältern oder Stapeln eingeleitet werden.

Zur Lösung der Aufgabe wird ein Verfahren mit den Merkmalen des Anspruches 1 vorgeschlagen. Die Vorrichtung wird in Anspruch 10 beansprucht. Weiterbildungen sind Merkmale der jeweiligen Unteransprüche.

Die Ausführungsbeispiele der Erfindung sind beispielhaft anhand der schematischen Zeichnungen näher beschrieben. Es zeigen:
Figur 1: einen Längsschnitt durch die Vorrichtung und die Formstation der vorgeschalteten Formmaschine nach dem Übergeben der Behälter
Figur 2: Eine Draufsicht auf die Vorrichtung in Pfeilrichtung (Figur 1) mit der Vorrichtung zum Erkennen von fehlenden oder unvollständig ausgeformten Behältern
Figur 3: einen Längsschnitt durch eine weitere Ausprägung der Vorrichtung mit einer vertikalen Stapeleinrichtung und die Formstation der vorgeschalteten Formmaschine.
Fig. 4 eine Seitenansicht einer Thermoformmaschine des Anmelders zum Formen, Vorstanzen und Ausbrechen mit der Vorrichtung zum Erkennen von fehlenden oder unvollständig ausgeformten Behältern.

Die Vorrichtung kann in verschiedenen Arten von Überführungsvorrichtungen verwendet und verschiedenen Thermoformwerkzeugtypen bzw. Baugruppen von Thermoformeinrichtungen nachgeschaltet werden, wie im folgenden beispielhaft beschrieben wird.

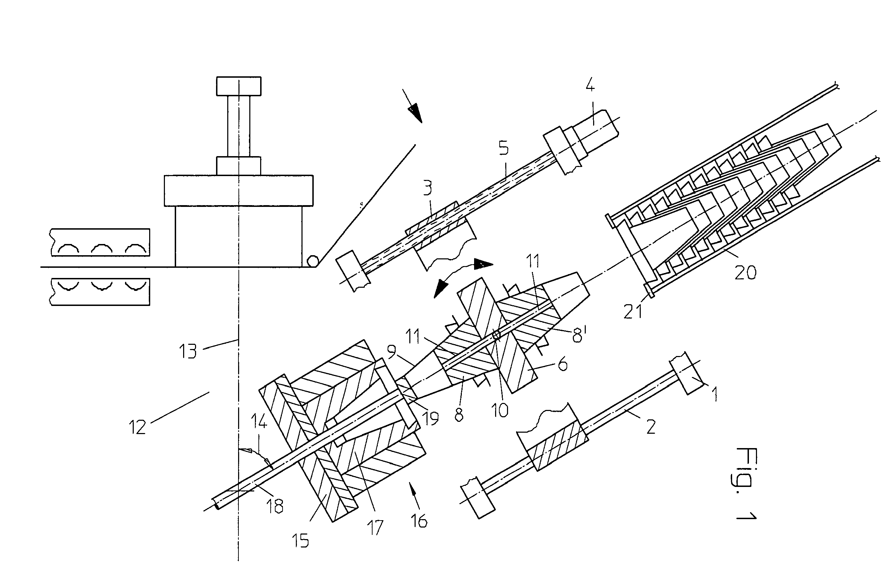

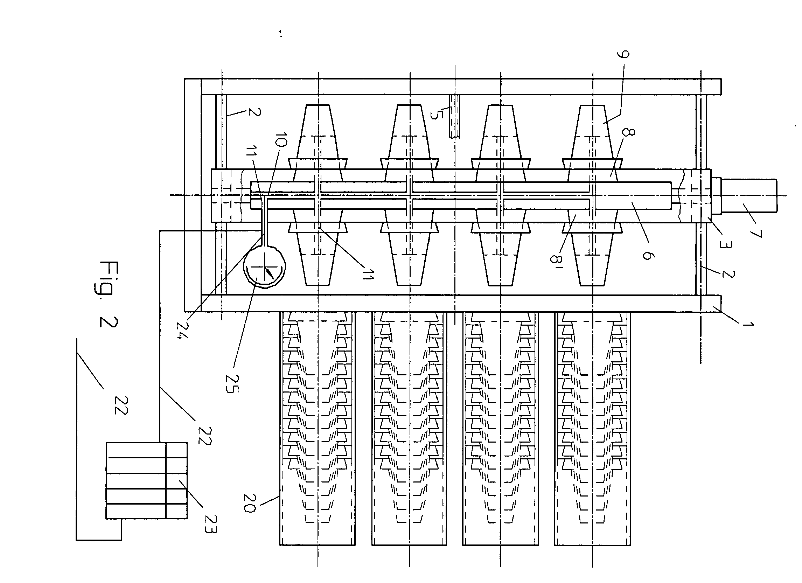

Die Vorrichtung nach Fig. 1 und 2 besteht aus einem ortsfesten Gestell 1 mit Führungen 2 für einen daran verschiebbaren Schlitten 3. Zum Verschieben dient ein Antrieb 4, der über eine Spindel 5 die Verschiebung bewirkt. Am Schlitten 3 ist drehbar eine Aufnahmeeinrichtung gelagert, bestehend aus Platte 6 und Aufnahmen 8, 8' auf beiden Seiten entsprechend der Anzahl der aufzunehmenden Behälter 9 pro Takt. Sie kann über einen Antrieb 7 verdreht werden. Platte 6 und Aufnahmen 8, 8' weisen zusätzlich Bohrungen 10, 11 auf, die mit einer Vakuumquelle in Verbindung gebracht werden können. Die Vorrichtung wird der Formstation 12 einer Thermoformmaschine nachgeschaltet, die einen höhenmäßig verschiebbaren und zur Vertikalen 13 um den Winkel 14 schwenkbaren Tisch 15 aufweist. Dieser trägt die Werkzeughälfte 16 mit den einzelnen Formen 17 der herzustellenden Behälter 9. Zum Ausstoßen der Behälter 9 dienen Stangen 18, die am Formboden 19 befestigt sind. In Axialrichtung des geschwenkten Tisches 15 verlaufen Stapelmagazine 20 mit Rückhalteorganen 21, die eingestapelte Behälter 9 zurückhalten. An der Platte 6 ist über eine Bohrung 11 und ein Rohr 24 eine Druckmesseinrichtung 25 angeordnet, welche eine Steuerleitung 22 zur Steuerung 23 aufweist. Von der Steuerung 23 führen weitere Steuerleitung 22 zu Antrieben der Thermoformmaschine und der Überführungsvorrichtung oder zum Bedienstand der Thermoformmaschine.

Die Überführungsvorrichtung arbeitet wie folgt:
Nach dem Absenken und Schwenken des Tisches 15 in die in Figur 1 dargestellte Stellung wird die Platte 6 über den Antrieb 4 soweit an die Werkzeughälfte 16 herangefahren, dass die ausgestoßenen Behälter 9 von den Aufnahmen 8 aufgenommen und angesaugt oder durch mechanische Einrichtungen gehalten werden können (Fig. 1). Die Platte 6 wird von der Werkzeughälfte 16 weggefahren. Sie übergibt die beim letzten Takt aufgenommenen Behälter 9 in die Stapelmagazine 20 und schwenkt über den Antrieb 7 um 180°. Während dieser Zeit ist die Vakuumquelle eingeschaltet und die Bohrungen (11) der Platte (6) sind von den aufgenommenen Behältern (9) abgedeckt, an die Platte (6) wird ein Unterdruck angelegt, der Unterdruck durch eine an die Platte (6) angeschlossene Druckmesseinrichtung (25) gemessen, dieser erste Wert mittels einer Steuerleitung (22) an eine Steuerung (23) übertragen, mit einem in die Steuerung (23) eingegebenen zweiten Wert verglichen und beim Überschreiten einer vorgegebenen Differenz der beiden Werte, hervorgerufen von offenen Bohrungen (11) durch fehlende oder Durchbrüche aufweisende Behälter (9), die Thermoformmaschine und die Überführungseinrichtung gestoppt. Bleibt die Differenz unter dem zulässigen Wert, so werden die Behälter 9 dieses Arbeitstaktes als in ihrer Anzahl vollständig und als frei von Durchbrüchen bewertet und beim nächsten Takt nehmen die Aufnahmen 8' die nächste Behälterreihe auf und der Schlitten 3 fährt einen ganzen Hub, so dass die beim letzten Takt aufgenommenen Behälter 9 in die Stapelmagazine 20 übergeben werden. Die Platte 6 wird wieder um 180° geschwenkt, so dass die leeren Aufnahmen 8 die nächsten Behälter 9 aufnehmen können, während die Aufnahmen 8' die zuvor ausgegebenen Behälter 9 weiter durch die Wirkung des Unterdrucks festhalten. Der Zyklus beginnt erneut.

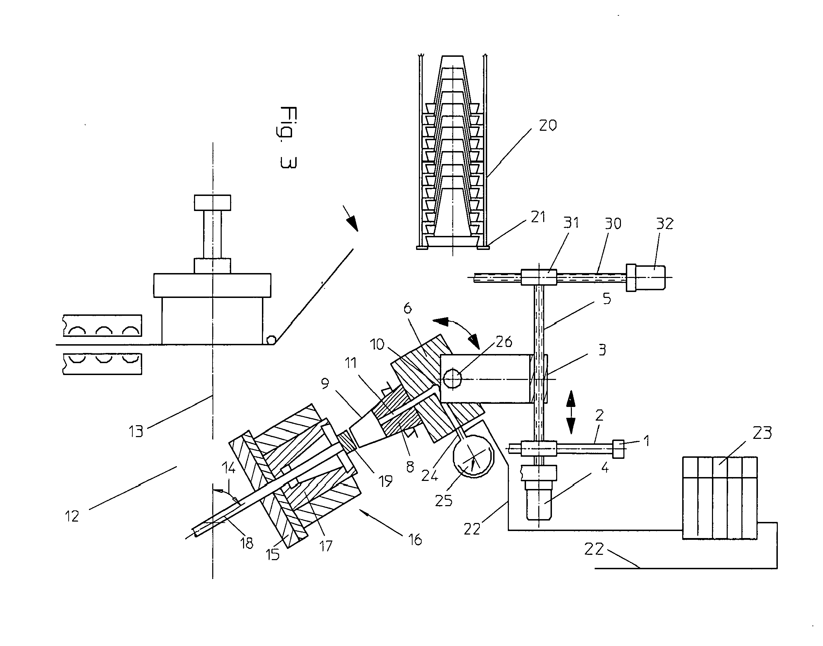

Die Vorrichtung nach Fig. 3 besteht aus einem ortsfesten Gestell 1 mit Führungen 2 für einen daran verschiebbaren Schlitten 31. Zum Verschieben dient ein Antrieb 32, der über eine Spindel 30 die Verschiebung bewirkt. Am Schlitten 31 ist eine weitere Spindel 5 mit einem weiteren Schlitten 3 angeordnet, in dem im Drehpunkt 26 eine Aufnahmeeinrichtung gelagert ist, bestehend aus Platte 6 und Aufnahmen 8 entsprechend der Anzahl der aufzunehmenden Behälter 9 pro Takt. Sie kann über einen nicht dargestellten Antrieb verdreht werden. Platte 6 und Aufnahmen 8 weisen zusätzlich Bohrungen 10, 11 auf, die mit einer Vakuumquelle in Verbindung gebracht werden können. Die Vorrichtung wird der Formstation 12 einer Thermoformmaschine nachgeschaltet, die einen höhenmäßig verschiebbaren und zur Vertikalen 13 um den Winkel 14 schwenkbaren Tisch 15 aufweist. Dieser trägt die Werkzeughälfte 16 mit der Form 17 der herzustellenden Behälter 9. Zum Ausstoßen der Behälter 9 dienen Stangen 18, die am Formboden 19 befestigt sind. Stapelmagazine 20 sind vertikal angeordnet und weisen Rückhalteorgane 21 auf, die die eingestapelten Behälter 9 zurückhalten. An der Platte 6 ist über eine Bohrung 11 und ein Rohr 24 eine Druckmesseinrichtung 25 angeordnet, welche eine Steuerleitung 22 zur Steuerung 23 aufweist.

Die Vorrichtung zum Übergeben der aus der Werkzeughälfte 16 ausgestoßenen Behälter 9 in die Stapelmagazine 20 arbeitet wie folgt:
Nach dem Absenken und Schwenken des Tisches 15 in die in Figur 3 dargestellte Stellung wird über die horizontal wirkende Spindel 5 und die Führung 2 der vertikal verschiebbare Schlitten 3 mit der verschwenkbaren Platte 6 zur Werkzeughälfte 16 verschoben und die Behälter 9 mittels der Formböden 19 ausgestoßen und von den Aufnahmen 8 aufgenommen und angesaugt oder durch mechanische Einrichtungen gehalten. Die Platte 6 schwenkt nach dem Zurückfahren der Formböden 19 in die Vertikale, verfährt mittels des vertikal arbeitenden Antriebs 4 nach oben, übergibt die aufgenommenen Behälter 9 in die Stapelmagazine 20 und verfährt bzw. verschwenkt in die Ausganglage zurück. Während dieser Zeit ist die Vakuumquelle eingeschaltet und die Bohrungen (11) der Platte (6) sind von den aufgenommenen Behältern (9) abgedeckt, an die Platte (6) wird ein Unterdruck angelegt, der Unterdruck durch eine an die Platte (6) angeschlossene Druckmesseinrichtung (25) gemessen, dieser erste Wert mittels einer Steuerleitung (22) an eine Steuerung (23) übertragen, mit einem in die Steuerung (23) eingegebenen zweiten Wert verglichen und beim Überschreiten einer vorgegebenen Differenz der beiden Werte, hervorgerufen von offenen Bohrungen (11) durch fehlende oder Durchbrüche aufweisende Behälter (9), die Thermoformmaschine und die Überführungseinrichtung gestoppt. Bleibt die Differenz unter dem zulässigen Wert, so werden die Behälter 9 dieses Arbeitstaktes als in ihrer Anzahl vollständig und als frei von Durchbrüchen bewertet. Der Zyklus beginnt erneut.

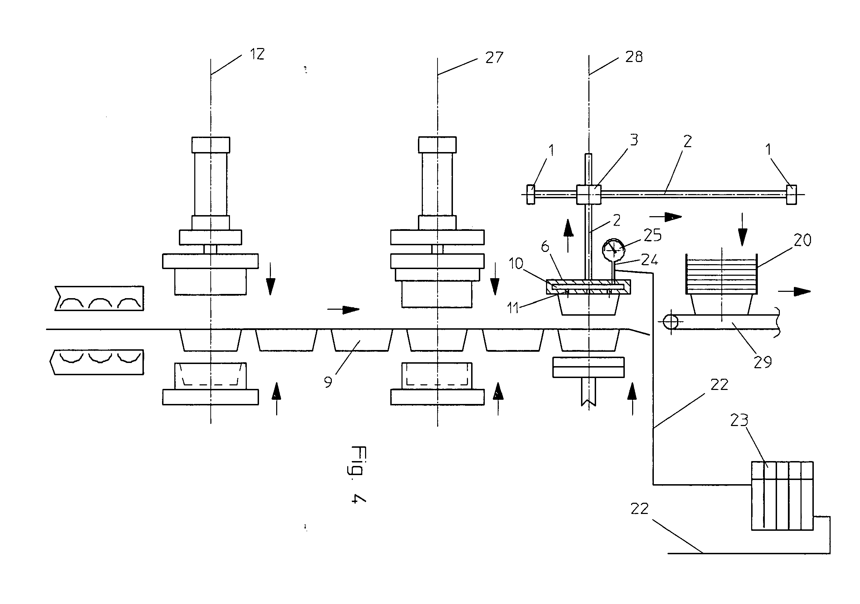

Die Vorrichtung nach Fig. 4 zeigt eine Thermoformanlage, bei der in einer Formstation 12 Behälter 9 geformt und in einer Stanzstation 27 so ausgestanzt werden, dass sie mit der thermoplastischen Kunststofffolie verbunden verbleiben und erst in einer Ausbrechstation 28 aus der Kunststofffolie ausgebrochen werden. Die Behälter 9 werden in einer Vertikalbewegung nach oben aus der Kunststofffolie ausgebrochen und von einer Überführungseinrichtung übernommen, die am Gestell 1 verschiebbar geführt ist und zur Aufnahme der Behälter 9 eine Platte 6 umfasst, an die durch Unterdruck die Behälter 9 gesaugt oder durch mechanische Einrichtungen gehalten werden. Angetrieben durch einen nicht dargestellten Antrieb und in Führungen 2 vertikal und horizontal gelagert, werden die ausgebrochenen Behälter 9 vertikal angehoben, anschließend horizontal mittels des Schlittens 3 zum Maschinenende verschoben und abschließend auf ein Stapelmagazin 20 oder ein Förderband 29 abgesenkt. Die Überführungseinrichtung wird danach wieder in die Ausgangsstellung zurückbewegt. Während dieser Zeit ist die Vakuumquelle eingeschaltet und die Bohrungen (11) der Platte (6) sind von den aufgenommenen Behältern (9) abgedeckt, an die Platte (6) wird ein Unterdruck angelegt, der

Unterdruck durch eine an die Platte (6) angeschlossene Druckmesseinrichtung (25) gemessen, dieser erste Wert mittels einer Steuerleitung (22) an eine Steuerung (23) übertragen, mit einem in die Steuerung (23) eingegebenen zweiten Wert verglichen und beim Überschreiten einer vorgegebenen Differenz der beiden Werte, hervorgerufen von offenen Bohrungen (11) durch fehlende oder Durchbrüche aufweisende Behälter (9), ein Ausgangssignal erzeugt und so die Thermoformmaschine und die Überführungseinrichtung gestoppt oder dieser Arbeitstakt bzw. der betreffende Stapel ausgeschieden. Bleibt die Differenz unter dem zulässigen Wert, so werden die Behälter 9 dieses Arbeitstaktes als in ihrer Anzahl vollständig und als frei von Durchbrüchen bewertet.

Die Vorrichtung zum Überführen von Behältern aus thermoplastischer Kunststofffolie von einer Aufnahmestation zu einer Abgabestation kann als Aufnahmen 8 neben Saugöffnungen zum Halten der Behälter 9 ebenso mechanische Halteeinrichtungen aufweisen. Dadurch ist eine Funktionstrennung zwischen dem Halten und dem Prüfen der Behälter 9 gegeben, indem die mechanischen Halteeinrichtungen die Behälter 9 auf den Aufnahmen 8 fixieren und durch die Saugöffnungen die Bohrungen 11 mit dem Inneren der Behälter 9 in Verbindung stehen zur Ermittlung des Druckwertes im System. Durch die Funktionstrennung kann der Unterdruck zur Prüfung der Behälter 9 z. B. an die Wandstärke der Behälter 9 angepasst werden, indem der Unterdruck zur Prüfung bei mechanisch empfindlichen, dünnwandigen Behältern 9 geringe Werte aufweist.

### Bezugszeichenliste

| | | | |
|---|---|---|---|
| 1 | Gestell | 21 | Rückhalteorgan |
| 2 | Führungen | 22 | Steuerleitung |
| 3 | Schlitten | 23 | Steuerung |
| 4 | Antrieb | 24 | Rohr |
| 5 | Spindel | 25 | Druckmesseinrichtung |
| 6 | Platte | 26 | Drehpunkt |
| 7 | Antrieb | 27 | Stanzstation |
| 8 | Aufnahme | 28 | Ausbrechstation |
| 9 | Behälter | 29 | Förderband |
| 10 | Bohrung | 30 | Spindel |
| 11 | Bohrung | 31 | Schlitten |
| 12 | Formstation | 32 | Antrieb |
| 13 | Vertikale | 33 | |
| 14 | Winkel | 34 | |
| 15 | Tisch | 35 | |
| 16 | Werkzeughälfte | 36 | |
| 17 | Form | 37 | |
| 18 | Stange | 38 | |
| 19 | Formboden | 39 | |
| 20 | Stapelmagazin | 40 | |

## Patentansprüche

1. Verfahren zum Überführen von aus einer thermoplastischen Kunststofffolie tiefgezogenen Behältern zwischen einer Aufnahmestation und einer Abgabestation mit einer zwischen beiden Stationen verschiebbaren Aufnahmeeinrichtung mit Einrichtungen zum Festhalten der Behälter, **dadurch gekennzeichnet, dass** zum Erkennen des Fehlen eines Behälters an einer Aufnahmestelle oder zum Erkennen eines ergriffenen und in der Wandung und/oder im Boden einen Durchbruch aufweisenden Behälters das Innere der Behälter mit einer Vakuumquelle in Verbindung gebracht, der sich einstellende Unterdruck gemessen, mit einem vorgegebenen Wert in einer Steuerung verglichen und bei einer Abweichung beider Werte von der Steuerung ein Ausgangssignal erzeugt wird.

2. Verfahren nach Anspruch 1, **dadurch gekennzeichnet, dass** die Aufnahmestation das Formwerkzeug oder die Ausbrechstation einer Thermoformmaschine ist.

3. Verfahren nach Anspruch 1 oder 2, **dadurch gekennzeichnet, dass** die Abgabestation ein Stapelmagazin oder ein Förderband ist.

4. Verfahren nach einem der Ansprüche 1 bis 3, **dadurch gekennzeichnet, dass** das Ausgangssignal für eine Fehlermeldung verwendet wird.

5. Verfahren nach einem der Ansprüche 1 bis 3, **dadurch gekennzeichnet, dass** das Ausgangssignal zu einem Abschalten der Vorrichtung zum Durchführen des Verfahrens und/oder zum Abschalten der Thermoformmaschine verwendet wird.

6. Verfahren nach einem der Ansprüche 1 bis 3, **dadurch gekennzeichnet, dass** das Ausgangssignal für das Ausscheiden des ergriffenen Nutzens verwendet wird.

7. Verfahren nach einem der Ansprüche 1 bis 3, **dadurch gekennzeichnet, dass** das Ausgangssignal für das Ausscheiden eines/mehrer der gebildeten Stapel(s) verwendet wird.

8. Verfahren nach einem der Ansprüche 1 bis 7, **dadurch gekennzeichnet, dass** das Festhalten der Behälter (9) durch den sich bildenden Unterdruck erfolgt.

9. Verfahren nach einem der Ansprüche 1 bis 7, **dadurch gekennzeichnet, dass** das Festhalten der Behälter (9) durch mechanisches Ergreifen erfolgt.

10. Vorrichtung zum Überführen von aus thermoplastischer Kunststofffolie tiefgezogenen Behältern (9) zwischen einer Aufnahmestation und einer Abgabestation mit einer zwischen den beiden Stationen verschiebbaren Aufnahmeeinrichtung mit Einrichtungen zum Festhalten der Behälter (9), die an eine Vakuumquelle anschließbar ist, **gekennzeichnet durch** eine mit der Steuerung (23) verbundene Druckmesseinrichtung. (25) zum Messen des sich während des Überführens im Inneren der Behälter (9) ergebenden Unterdruckes, wobei die Steuerung (23) bei Abweichung des gemessenen Wertes von einem vorgegebenen Wert ein Ausgangssignal erzeugt.
